(19) Europäisches Patentamt / European Patent Office / Office européen des brevets

(11) **EP 1 749 447 B1**

(12) **EUROPEAN PATENT SPECIFICATION**

(45) Date of publication and mention
of the grant of the patent:
**27.08.2014 Bulletin 2014/35**

(51) Int Cl.:
**A23C 9/13** (2006.01)    **A23C 9/12** (2006.01)

(21) Application number: **05738903.3**

(22) Date of filing: **02.05.2005**

(86) International application number:
**PCT/JP2005/008663**

(87) International publication number:
**WO 2005/110108 (24.11.2005 Gazette 2005/47)**

(54) **METHOD OF PRODUCING YOGURT**

VERFAHREN ZUR HERSTELLUNG VON JOGHURT

PROCÉDÉ DE FABRICATION DE YAOURT

(84) Designated Contracting States:
**AT BE BG CH CY CZ DE DK EE ES FI FR GB GR HU IE IS IT LI LT LU MC NL PL PT RO SE SI SK TR**

(30) Priority: **10.05.2004 JP 2004139757**

(43) Date of publication of application:
**07.02.2007 Bulletin 2007/06**

(73) Proprietor: **Ajinomoto Co., Inc.**
**Tokyo 104-8315 (JP)**

(72) Inventors:
• **BONISCH, Martin,**
**Technische Universität München**
**85354 München (DE)**
• **KULOZIK, Ulrich,**
**Technische Universität München**
**85354 München (DE)**
• **HUB, Manfred,**
**Technische Universität München**
**85354 München (DE)**
• **MORITA, Akiko,**
**c/o AJINOMOTO CO., INC.**
**Kawasaki-shi,**
**Kanagawa 2108681 (JP)**

(74) Representative: **Strehl Schübel-Hopf & Partner**
**Maximilianstrasse 54**
**80538 München (DE)**

(56) References cited:
**EP-A- 0 610 649       EP-A- 0 966 887**
**EP-A- 1 197 152       WO-A-01/10232**
**JP-A- 6 197 688       JP-A- 2000 004 786**
**JP-A- 2002 369 653**

• **JELEN P. ET AL: 'Heat stability and use of milk with modified casein: whey protein in yogurt and cultured milk products.' MILCHWISSENSCHAFT. vol. 42, no. 7, 1987, pages 418 - 421, XP002988449**

**Description**

Technical Field

The present invention relates to a method for producing yogurt by using transglutaminase.

Background Art

Yogurt, which is originally produced by allowing cow milk, goat milk, ewe milk or the like as it is or a concentrate thereof to be inoculated with a lactic acid bacteria starter and fermented, is known as a fermented dairy product having an acid-sweet taste, a characteristic taste, and a refreshing taste. Although yogurt is recently varied in kinds, for example, even to that added with fruit juice or flesh of fruit, it can be roughly divided into two types; namely, one type is a hard type which is produced such that raw materials including milk are inoculated with a predetermined amount of starter, put in a container for distribution such as a glass bottle, or a paper container, allowed to be fermented and hardened in a pudding state, and the other one type is a soft type which is produced by, after such fermentation as described above, crushing the thus-fermented product, and put in a container for individual consumption for distribution. Production methods for these types of yogurt mainly each contain 4 steps or 5 steps, as described in JP-A No. 2001-252011, and Japanese Patent No. 3182954.

The hard type is as follows:

(a first step) raw material milk preparation: raw materials including milk are stirred, sterilized by heating, and cooled down to about 40°C;
(a second step) starter addition and filling: after a predetermined amount of lactic acid bacteria starter is added to the raw material milk preparation, the resultant raw material milk preparation is put in a container for individual consumption for distribution;
(a third step) fermentation start: after such putting, the raw material milk preparation thus put in the container is placed in a fermentation chamber at about 40°C, to thereby accelerate fermentation; and
(a fourth step) fermentation stop: after a stable gel (yogurt curd) is formed by an isoelectric point coagulation of casein, the fermentation is terminated by cooling the thus-formed stable gel by placing it in a refrigerator at 10°C or less, to thereby produce a product.

On the other hand, the soft type is as follows:

(a first step) raw material milk preparation: raw materials including milk are stirred, sterilized by heating, and cooled down to about 40°C;
(a second step) starter addition and fermentation start: after a predetermined amount of lactic acid bacteria starter is added to the raw material milk preparation, the resultant raw material milk preparation is placed in a fermentation chamber at about 40°C, to thereby accelerate fermentation;
(a third step) yogurt curd crushing: after a stable yogurt curd is formed by an isoelectric point coagulation of casein, the yogurt curd is crushed such that it has a structure in a semi-liquid state;
(a fourth step) filling: the curd thus having the structure in the semi-liquid state is filled in a container for individual consumption for distribution. Further, conditions of such filling step vary in accordance with recipe of yogurt or filling facilities and there is a case in which the filling is performed at a temperature near to fermentation temperature while there is another case in which an addition is performed after the yogurt curd is cooled to some extent. Further, when sources of flesh of fruit is added to the yogurt curd, it is necessary that a source of flesh of fruit is filled at the same time the thus-crushed yogurt curd is filled or the source of flesh of fruit is added in a step prior to the filling step; and
(a fifth step) fermentation stop: fermentation is terminated by cooling the thus-filled yogurt curd by placing it in a refrigerator at 10°C or less, to thereby produce a product. Further, depending on a recipe of yogurt, there is a case in which, before being filled, yogurt is cooled to stop fermentation.

At the time of producing yogurt, ordinarily, in order to improve physical properties or enhance gastronomical texture, various types of proteins and thickening polysaccharides are added.

As for milk proteins, mainly, various types of powdered milk represented by whole powdered milk, powdered skim milk and the like, various types of casein powder represented by acid casein, sodium caseinate and the like, various types of whey powder which are each a by-product at the time of producing the cheese and producing the casein or the like are utilized and, then, quality improvement is aimed for by increasing a content of the protein. Besides a method for adding the protein as described above, there is a method of providing a milk concentration step in a production process. Such finding as that a product is improved by increasing a total solid content of yogurt mix is a known fact and is described in "Milk Comprehensive Dictionary" p. 237, Asakura Publishing Co., Ltd. (1992).

As other proteins than the milk protein, gelatin is used. Since gelatin has a property of being gelled at a low temperature, a quality improvement is aimed for by reinforcing a structure of a yogurt curd. At the same time, since gelatin is easily disintegrated in the mouth at the time of eating or drinking compared with other raw materials, it is used in a multiple of applications.

As for thickening polysaccharides, types thereof are not particularly limited so long as they can be dissolved in water and form hydrocolloid, and xanthan gum, locust bean gum, carrageenan, griloid, an alginate or pectin, agar, and the like are mentioned. These raw materials contribute to the quality improvement by increasing a viscosity of the yogurt curd or reinforcing a gel structure.

As for ordinary effects of the above-described raw materials, reduction of water separation at rest, provision of hardness and viscosity to yogurt, provision of a creamy feeling to a gastronomical texture, provision of richness feeling and the like are mentioned. However, the above-described product which can be obtained by any one of the known methods including a production method which is now performed in an industrial scale does not necessarily satisfy various conditions required for yogurt and leaves plenty of room for improvement. Further, besides technologies which are aimed for the quality improvement by adding the protein or the thickening polysaccharide as described above, studies for aiming for the quality improvement of yogurt by an action of transglutaminase have been exerted. As for advantages of the quality improvement by using transglutaminase, a comprehensive cost merit compared with the above-described quality improving agent, possibility of obtaining a desired effect regardless of reduction of the number of additives indicated in a list of raw materials of the product by replacing the additive and the like are mentioned.

In Japanese Patent No. 3182954, a production method for yogurt which is characterized in that raw material milk is pretreated with transglutaminase, transglutaminase is deactivated by heating and, then, the raw material milk is inoculated with a starter and fermented is described. It is described that, by a technique described therein, yogurt which has a smooth gastronomical texture and does not generate water-separation can be produced. In this method, it is an important characteristic that it has a heating step such that an enzymatic activity does not remain. Further, in the above-described Japanese Patent No. 3182954, there is a description to the effect that a heat-deactivating step simultaneously serves as a heat-sterilizing step. However, in order to deactivate the enzyme, such a heating condition as a treatment with a reaching temperature of 95°C is necessary.

Meanwhile, it is confirmed that, when yogurt is prepared under a condition in which the enzymatic activity remains without taking an enzyme deactivating step, physical properties of yogurt are changed during storage of a product by an influence thereof and, then, thus-changed physical properties give a detrimental effect to the quality. Particularly, in yogurt in which a solid content is increased by adding a milk protein in raw material milk, the influence is remarkable. It is also confirmed that, when yogurt is prepared without performing the heat-deactivating step, a commercial value thereof is remarkably decreased such that a texture of yogurt curd becomes rough during storage, gelation is observed and the like. For this account, when transglutaminase is used in a whole yogurt, particularly, yogurt in which non-fat milk solid content is increased, the heat-deactivating step has been considered essential.

However, in a case in which it is difficult to perform the heat-deactivating step due to a restriction of facilities, it is not easy to deactivate transglutaminase. Further, in a case in which yogurt is produced by using sterilized milk as raw material milk, since there is, ordinarily, no heating step after a culture addition, an extra cost is added in performing the heat-deactivating step. For this reason, in a case in which the heat-deactivating step of transglutaminase can not be performed simultaneously with the sterilizing step, transglutaminase has not been much utilized. Under these circumstances, in a production method for yogurt utilizing transglutaminase, a development of a technique to prevent and control a detrimental effect caused by the remaining activity has anxiously been desired. Further, although production methods for yogurt by using transglutaminase are described in JP-A No. 2001-252011, Japanese Patent No. 3182954, and WO200110232, there is no description on a method for preventing and controlling the detrimental effect caused by the remaining activity of the enzyme.

Still further, the present inventors have found in a process of developing the product that, even when a step for deactivating transglutaminase is introduced as in Japanese Patent No. 3182954, in a case in which a milk protein is added to a raw material milk, transglutaminase reacts excessively and, then, problems that a quality of the product is changed during storage, the texture becomes rough, lumps are generated and the like occur; however, a method for preventing and controlling the detrimental effect caused by these facts has not been established.

Next, with reference to a milk protein treated product of a mixture of casein and whey protein to be used in the present invention, a difference between an analogous art and the present invention is described in more detail.

In Dairy Chemistry and Biochemistry, pp. 363 to 368, BLACKIE ACADEMIC & PROFESSIONAL, it is described that whey protein is susceptible to heating and the degree of denaturation thereof is changed by heating. In Dairy Chemistry and Biochemistry, pp. 363 to 368, BLACKIE ACADEMIC & PROFESSIONAL, results of measuring the degree of denaturation of the whey protein by heating skim milk in different temperature zones are described and it is explained there that, as the heating temperature is higher, denaturation occurs in a shorter period of time. However, with reference to the degree of denaturation of the whey protein, there is no description at all as to what range is optimum for a quality improvement of a milk product. Data described in Dairy Chemistry and Biochemistry, pp. 363 to 368, BLACKIE ACADEMIC & PROFESSIONAL are data of heating the skim milk under a condition in which a ratio of casein to whey protein is fixed to be 8:2. There is no description at all as to a case in which the ratio of the casein to the whey protein is changed from 8:2 derived from the raw material milk and there is no description also on a simultaneous use of transglutaminase. Therefore, it can not be said that the present invention can easily be conceived from Dairy Chemistry and Biochemistry, pp. 363 to 368, BLACKIE ACADEMIC & PROFESSIONAL.

Further, with reference to the mixture of the casein and the whey protein, it is described in US patent Nos. 3535304 and 4519945, and Dairy Chemistry and Biochemistry, pp. 227 to 228, BLACKIE ACADEMIC & PROFESSIONAL that a mixture treated product of the whey protein and the casein is prepared by heat-treating the skim milk. However, a ratio of the casein to the whey protein in this case is fixed to a ratio intrinsic to milk, namely, 8:2 and there is no description at all as to the degree of denaturation of the whey. According to the present invention, a mixture of casein and whey protein is prepared by intentionally changing this ratio and the degree of denaturation of the whey protein is studied in detail and, then, the ratio and the degree of denaturation of the whey optimal to a dairy product, particularly, yogurt which uses transglutaminase are found out. Since there is no description at all which can conceive the above-described study in US patent No. 4519945, and Dairy Chemistry and Biochemistry, pp. 227 to 228, BLACKIE ACADEMIC & PROFESSIONAL, the present invention can not easily be conceived from these references and can be said to be different from technologies mentioned in the above-described references.

Further, in US Patent No. 3882256, a milk protein mixture treated product in which a compounding ratio of casein against whey protein is changed and, also, solubility (water-soluble nitrogen index) of milk protein is changed by using calcium chloride and sodium tripolyphosphate is prepared and, then, the compounding ratio and solubility suitable for a baked product such as biscuit are studied. Although it is similar to the present invention on a point in which an optimal compounding is studied by changing the ratio of casein against whey, a technique in US Patent 3882256 has objects of quality improvement of the baked product and workability improvement at the time of handling dough while the present invention has an object of preventing and controlling detrimental effects caused by remaining activity of transglutaminase or an excessive reaction of transglutaminase (texture becomes rough, lumps are generated and the like) about a dairy product which uses transglutaminase, particularly, yogurt, by optimizing not only the ratio of the casein against the whey but also the degree of denaturation of the whey. As described above, objects of US Patent No. 3882256 and the present invention are completely different from each other and, then, the present invention can not easily be conceived from the technique of US Patent 3882256.

As described above, according to the present invention, a mixture of casein and whey is prepared by intentionally changing the ratio of the casein to the whey and the degree of denaturation of the whey is studied in detail and, then, optimal ratio of the casein to the whey protein and degree of denaturation of the whey at the time of using transglutaminase in a milk product, particularly, yogurt are found. The technique of the present invention, as described above, can not easily be achieved by combinations of known references and has been obtained as a result of intensive studies.

Disclosure of the Invention

An object of the present invention is to improve quality of yogurt on a gastronomical texture and water separation in a production method for yogurt which utilizes transglutaminase, particularly, to prevent and control detrimental effects (texture becomes rough, lumps are generated and the like) caused by remaining activity of transglutaminase or an excessive reaction to milk protein in yogurt.

In order to solve these problems, the present inventors have exerted intensive studies and, as a result, found that, in a production method for yogurt which uses transglutaminase, by performing treatment by a heating condition such that a degree of denaturation of a whey protein in milk protein to be used for the purpose of quality improvement comes in a predetermined range, the above-described problems can be solved. Namely, the present invention is:

    1. A production method for yogurt, using a milk protein treated product to be obtained by heat-treating a whey protein under a condition in which a degree of denaturation of the whey protein is from 60 to 88% and transglutaminase wherein such heat-treatment is performed at from 81°C to 89°C for from 1 to 10 minutes.

    2. A production method for yogurt, using a milk protein treated product to be obtained by heat-treating a mixture in which a mixing ratio of casein to a whey protein is from 20:80 to 54:46 in terms of weight ratio of nitrogen under a condition in which a degree of denaturation of the whey protein is from 25% to 93% and transglutaminase.

    3. The production method according to the above-described product 2, in which the milk protein treated product is obtained by heat-treating a mixture in which a mixing ratio of casein to a whey protein is from 32:68 to 48:52 in terms of weight ratio of nitrogen under a condition in which a degree of denaturation of the whey protein is from 27% to 79%.

    4. The production method according the above-described products 1 to 3, being characterized in that, in yogurt which is an end product, a degree of polymerization of casein by transglutaminase is from 15 to 33%.

    5. The production method according to the above-described products 1 to 4, being characterized in that a ratio of casein to a whey protein in yogurt which is an end product is from 77:23 to 65:35 in terms of weight ratio of nitrogen.

6. The production method according to the above-described products 1 to 5, being characterized in that an amount of the milk protein treated product to be added to a raw material milk is from 0.2 to 2.3%.

7. The method according to the above-described products 1 to 6, being characterized by not containing the step of heat-deactivating transglutaminase.

8. An enzyme preparation for a dairy product, containing a milk protein treated product to be obtained by heat-treating a whey protein under a condition in which a degree of denaturation of the whey is from 60 to 88% and transglutaminase.

9. An enzyme preparation for a dairy product, containing a milk protein treated product to be obtained by heat-treating a mixture in which a mixing ratio of casein to a whey protein is from 20:80 to 54:46 in terms of weight ratio of nitrogen under a condition in which a degree of denaturation of the whey protein is from 25% to 93% and transglutaminase.

Further, a mechanism which can obtain an effect of the present invention is considered to be as described below. Firstly, casein which is a substrate of transglutaminase is heated in the coexistence of a whey protein, the whey is combined with the periphery of casein and, then, casein is, as it were, coated with the whey protein. As a result, it is considered that the whey protein, while playing a role as a spacer between transglutaminase and casein, controls an excessive reaction of transglutaminase to casein and, then, the effect of the present invention can be obtained.

Now, a method for preparing a milk protein treated product to be used in the present invention is described. With reference to preparation of the milk protein, the protein may be prepared by using a method containing the above-described conditions. Firstly, with reference to raw materials, types of casein or whey protein are not particularly limited. For example, as for raw materials for casein, types are not inquired and origins are not limited so long as a main component of the contained protein is casein or a salt of casein, such as powdered skimmed milk, whole powdered milk, an product in which lactose or lipid is removed from the above-described powdered milk and a sodium salt of casein. As for raw materials for the whey protein, types are not inquired so long as the whey protein is allowed to be a main component of the contained protein; for example, a concentrated whey protein (WPC), and a purified whey protein (WPI) can be mentioned and other components than the whey protein, for example, lactose or any one of various types of minerals may be contained. As for the origins thereof, they are not particularly limited so long as the above-described characteristics are satisfied; for example, so long as it is the whey protein, that separated form milk itself at the time of purifying casein may be used, cheese whey which is generated as a by-product at the time of producing cheese may be used. Further, shapes of the above-described raw materials are not particularly limited. That in powder state may be used, or that in a liquid state prepared by being previously dissolved may be used. A mixing ratio of casein to a whey protein may be from 20:80 to 54:46 and, preferably, from 32: 68 to 48: 52 in terms of weight ratio of nitrogen. Still further, as for the weight of nitrogen in casein or the whey protein, for example, a valued analyzed by a Kjeldahl method may be used.

As for state of the milk protein mixture at the time of heating, from the standpoint of the mechanism which can obtain the effect of the present invention, it is desirable that the mixture is heated in a solution state such that both proteins can be interacted with each other under a heating condition. In a case in which the milk protein is a dried product, it is desirable that the dried product is dispersed in city water, milk or the like to prepare a solution and, then, the milk protein is heated in a state of the thus-prepared solution.

As for the milk protein treated product according to the present invention to be obtained by heat-treating the whey protein without being mixed with casein, it is necessary to perform a heat-treatment under a condition in which a degree of denaturation of the whey protein is from 60 to 88%, preferably from 67 to 88% and, more preferably, from 77 to 88%.

As for the milk protein treated product according to the present invention to be obtained by heat-treating a mixture in which a mixing ratio of casein to the whey protein is from 20:80 to 54:46 and, preferably, from 32:68 to 48:52 in terms of weight ratio of nitrogen, it is necessary to perform such heat-treatment under a condition in which the degree of denaturation of the whey protein is from 25% to 93% and, preferably, from 27 to 79%.

Next, the heating condition in which a degree of denaturation of the whey is from 25 to 93% is described. For example, in a case in which a mixing ratio of casein to a whey protein is from 20:80 to 54:46, the heating condition is at from 81°C to 89°C for from 1 to 10 minutes and, preferably, at from 82°C to 86°C for from 2 to 4 minutes. However, a heating temperature, a heating time and a heating method are not inquired so long as the mixing ratio of casein to the whey protein is from 20:80 to 54:46 in terms of weight ratio of nitrogen and the degree of denaturation of the whey is from 25 to 93%. As for the heating method, apparatuses and methods which can be used in an ordinary solution heating are all applicable. For example, heating by using a thermostat vessel, a sterilizer using a heat exchange plate or the like can be used.

The degree of denaturation of the whey can be calculated in accordance with the following calculating formula by firstly analyzing $\alpha$-lactalbumin, $\beta$-globulin A, and $\beta$- globulin B in milk protein mixtures before and after heating by using a liquid chromatography and, then, taking a sum of the above-described three.components as an amount of the whey protein:

$$\mathtt{Whey\ denaturation\ degree\ (\%)=(1-whey\ protein\ amount}$$

$$\mathtt{after\ heating/whey\ protein\ amount\ before\ heating)\times100.}$$

Further, each component of the whey protein which is associated or agglomerated with casein by heating can not be detected by the liquid chromatography. As the amount of the whey protein after heating is smaller, the whey protein is more denatured or reacted. Conditions of analysis of each of the above-described components of the whey protein by the liquid chromatography are as follows:

Flow rate: 1.0 ml/min;
Column: Latec 300Å, 8 $\mu$m;
Detection wavelength: 226 nm;
Eluting solution A: pure water+0.1% trifluoroacetic acid; and
Eluting solution B: acetonitrile/pure water 80/20 (V/V)+0.555% trifluoroacetic acid.

The milk protein mixture to be supplied to the liquid chromatography is firstly diluted with distilled water such that a protein concentration comes to be about 1% and, then, adjusted to have a pH value of 4.6 which is an isoelectric point of casein and, thereafter, casein is allowed to be precipitated and, subsequently, the thus-precipitated casein is removed by using a microfilter having a pore size of 0.45 $\mu$m. A supernatant subjected to a filter treatment is further diluted with distilled water such that a whey concentration comes to be about 0.1% and, then, allowed to be supplied to the liquid chromatography.

It is desirable that a final form of the milk protein treated product to be used in the present invention is a dried form from the standpoint of easiness of handling and a restriction at the time of compounding yogurt. However, an product in a liquid state which does not passing through a drying step can also be utilized. As for drying methods, all methods which are ordinarily used for drying solutions are applicable. For example, a drum-dry method, a freeze-dry method, and a spray-dry method are mentioned and, from the standpoint of a drying efficiency, and dried powder characteristics, it is desirable to perform drying by using the spray-dry method. Further, the drying condition is not particularly limited so long as it is an ordinary condition and, for example, in a case of the spray-dry method, it is preferable to set an inlet temperature and a temperature at which a drying step is performed to be 180°C and an outlet temperature to be about 80°C.

Subsequently, the production method for yogurt which uses the milk protein treated product according to the present invention will be described. As for the production method for yogurt, a specific step is not necessary at all and, in the ordinary production process for yogurt as described above, the milk protein treated product prepared by the above-described method and transglutaminase may be added. The timing of addition of the above-described milk protein treated product or a form to be added is not particularly inquired and, from the standpoint of possibility of uniform mixing, it is desirable to add it at the time of preparing a milk raw material mixed solution (hereinafter, referred to also as "yogurt milk" for short) in a first step. An amount of the milk protein treated product to be added is appropriately determined such that a ratio of casein to the whey protein in yogurt which is the end product comes to be from 77:23 to 65:35 in terms of weight ratio of nitrogen. For example, the amount of the milk protein treated product to be added to the raw material milk is appropriately from 0.2 to 2.3% and, preferably, from 0.25 to 2.0%.

Casein in yogurt is polymerized by an action of transglutaminase and a degree of polymerization of casein by transglutaminase is, preferably, from 15 to 33% and, more preferably from 18 to 32%. When the degree of polymerization is less than 15%, a constitutional structure of yogurt is brittle, while, when the degree of polymerization is more than 33%, problems are generated in that structure becomes rough, a fine texture is lost, a structural change occurs during storage and the like. The degree of polymerization can be calculated in accordance with the following calculating formula by firstly analyzing contents of a monomer, a dimer, a trimer and a multimeric body (polymer higher than trimer) of casein by using a size exclusion chromatography and, then, taking a sum of the above-described four components as an amount of an entire casein protein:

$$\text{Casein polymerization degree (\%)}$$

$$= (\text{dimer} + \text{trimer} + \text{multimeric body})$$

$$/ (\text{monomer} + \text{dimer} + \text{trimer} + \text{multimeric body}) \times 100.$$

When the activity of transglutaminase is allowed to remain, it may be added in a period of from after sterilization of the yogurt milk to before initiation of fermentation, or, as in the fermentation, when transglutaminase is in a state capable of being diffused in an entire yogurt curd, it may be added, while, when transglutaminase is allowed to be deactivated, it may be added without any particular restriction so long as it is added before heat-sterilization.

The production method for yogurt which is characterized by not containing the step of heat-deactivating transglutaminase means a production method which does not contain a heating step which is a condition of deactivating the enzyme, such as a treatment of 95°C reaching temperature in the step after addition of transglutaminase.

A concentration of an aqueous transglutaminase solution to be used in the present invention may be any concentration so long as an action of transglutaminase is exhibited. Specifically, from 0.01 to 100 units (hereunder, the term "units" is referred to also as "U" for short) and, preferably, from 0.1 to 50 U of transglutaminase per gram of milk protein is allowed to be contained. When the amount to be added is less than the above-described range, the improvement of the properties can not be achieved, and effects of the anti-water-separation will be small. Also, when the amount is over the above-described range, since the product will harden into a gel form, and yogurt-like smoothness of the product will be lost, which are not favorable.

Further, the units of activity of transglutaminase according to the present invention are measured and determined as described below. Namely, a reaction is carried out with benzyloxycarbonyl-L-glutaminylglycine and hydroxylamine as substrates. The resultant hydroxamic acid is allowed to form an iron complex in the presence of trichloroacetic acid, after which the absorbance at 525 nm is measured. The amount of hydroxamic acid is determined from a corresponding calibration curve to calculate the activity (refer to JP-A No. 1-27471).

In order to sufficiently exhibit an enzymatic effect of transglutaminase, ordinarily, it may be kept for from 10 to 120 minutes under conditions which are suitable for the action of transglutaminase, that is, a pH value of from 6 to 7 and a temperature of from about 5 to about 65°C and, preferably, from about 40 to about 55°C. In the case of yogurt according to the present invention, the fermentation step can concurrently serve as the enzymatic reaction step. As the fermentation by the lactic acid bacteria progresses, a pH value of yogurt is decreased and, then, reaction efficiency of transglutaminase is deteriorated and, for this reason, it is desirable that transglutaminase is simultaneously added at the time a starter is added to a yogurt milk which has previously been sterilized. An addition method of transglutaminase is not particularly limited. For example, powder thereof may directly be added and, then, allowed to be dissolved or it is previously dissolved in milk or water to form a solution state and, then, transglutaminase in the thus-formed solution state may be added.

With reference to transglutaminase to be used in the present invention, that derived from a mammal (see JP-B No. 1-50382), that derived from fish (see Japanese Society of Fisheries Science, Heisei 3 (1991) Autumnal Conference, Proceedings, p. 180), those derived from a plant and a microorganism (see JP-A No. 1-27471) and that derived from a gene recombination (see JP-A No. 1-300899) and the like. According to the present invention, a transglutaminase derived from any source may be used.

Best Mode for Carrying Out the Invention

Hereinafter, examples are given to illustrate the invention and should not be interpreted as limiting it in any way.

Example 1

A milk protein mixture for use in yogurt was prepared in a manner as described below. Various types of milk protein mixtures which are different from one another in the ratio of casein to whey protein were prepared by using WPC 35 (liquid whey protein; protein content: about 10%; manufactured by BMI) and a concentrated skim milk (liquid skim milk; protein content: about 10%; manufactured by BMI). Further, an entire protein concentration at the time of preparing the mixed solution was set to be about 10% and other components than casein and the whey protein such as lactose were allowed to be same in all of prepared samples. Compounding ratios are shown in Table 1.

Table 1 Compounding ratio of milk protein treated product, heating condition and whey denaturation degree

| Experimental section | Skim milk (kg) | WPC (kg) | Ratio of casein in milk protein treated product (%) | Ratio of whey protein in milk protein treated product (%) | Heating condition | Whey denaturation degree(%) |
|---|---|---|---|---|---|---|
| Comparative product 1 | 0 | 20 | 0 | 100 | 80°C, 3 min | 31.9 |
| Comparative product 2 | 8 | 12 | 32 | 68 | 80°C, 3 min | 18.6 |
| Comparative product 3 | 10 | 10 | 40 | 60 | 80°C, 3 min | 13.3 |
| Comparative product 4 | 12 | 8 | 48 | 52 | 80°C, 3 min | 15.3 |
| Comparative product 5 | 15 | 5 | 60 | 40 | 80°C, 3 min | 16.0 |
| Comparative product 6 | 20 | 0 | 80 | 20 | 80°C, 3 min | 18.6 |
| Comparative product 7 | 0 | 20 | 0 | 100 | 90°C, 3 min | 89.1 |
| Comparative product 8 | 8 | 12 | 32 | 68 | 90°C, 3 min | 95.8 |
| Comparative product 9 | 10 | 10 | 40 | 60 | 90°C, 3 min | 95.1 |
| Comparative product 10 | 12 | 8 | 48 | 52 | 90°C, 3 min | 94.4 |
| Comparative product 11 | 15 | 5 | 60 | 40 | 90°C, 3 min | 90.4 |
| Comparative product 12 | 20 | 0 | 80 | 20 | 90°C, 3 min | 97.1 |
| Inventive product 1 | 0 | 20 | 0 | 100 | 84°C, 3 min | 77.1 |
| Inventive product 2 | 8 | 12 | 32 | 68 | 84°C, 3 min | 79.8 |
| Inventive product 3 | 10 | 10 | 40 | 60 | 84°C, 3 min | 78.5 |
| Inventive product 4 | 12 | 8 | 48 | 52 | 84°C, 3 min | 67.8 |
| Comparative product 13 | 15 | 5 | 60 | 40 | 84°C, 3 min | 49.9 |
| Comparative product 14 | 20 | 0 | 80 | 20 | 84°C, 3 min | 42.6 |

The milk protein mixed solution prepared in accordance with Table 1 was heated at 80°C, 84°C, or 90°C for 3 minutes by using a Scraped surface heat exchanger (Schroder, Lubeck, Germany) and, then, dried by using a spray dryer of Niro Atomizer (manufactured by Soeborg, Denmark). With reference to drying conditions of the spray dryer, the temperature from the inlet through the drying step was set to be 180°C and the temperature at the outlet was set to be 80°C. With reference to the thus-prepared milk protein treated product, in order to gain an understanding of characteristics thereof, a degree of denaturation of the whey in the treated product was measured. The results are also shown in Table 1. The degree of denaturation of the whey can be calculated in accordance with the following calculating formula by firstly analyzing α-lactalbumin, β-globulin A, and β-globulin B in milk protein mixtures before and after heating by using a liquid chromatography and, then, taking a sum of the above-described three components as an amount of the whey protein:

$$\text{Whey denaturation degree (\%)=(1-whey protein amount}$$

$$\text{after heating/whey protein amount before heating)} \times 100.$$

When the above-described components of the whey protein were analyzed by using the liquid chromatography under the following conditions, times at which peaks of α-lactalbumin,β -globulin A, and β-globulin B appeared were after about 9.5 minutes, after about 19.5 minutes, and after about 19 minutes, respectively:

Flow rate: 1.0 ml/min;
Column: Latec 300Å, 8 μm;
Detection wavelength: 226 nm;
Eluting solution A: pure water+0.1% trifluoroacetic acid; and
Eluting solution B: acetonitrile/pure water 80/20 (V/V)+0.555% trifluoroacetic acid.

Further, each of the milk protein mixtures to be supplied to the liquid chromatography was firstly diluted with distilled water such that a protein concentration came to be about 1% and, then, adjusted to have a pH value of 4.6 which is an isoelectric point of casein and, thereafter, casein was allowed to be precipitated and, subsequently, the thus-precipitated casein was removed by using a microfilter having a pore size of 0.45 μm. A supernatant subjected to a filter treatment was further diluted with distilled water such that a whey concentration came to be about 0.1% and, then, allowed to be supplied to the liquid chromatography.

Next, a soft type yogurt was prepared by using the thus-prepared milk protein treated product. Sterilized skim milk (protein content: 3.4%) was added with the above-described treated product in an amount corresponding to 1% of the amount of the raw material milk, to thereby prepare yogurt milk in which the protein concentration was adjusted to be 4.4%. The yogurt milk in which the protein concentration has been adjusted (15 kg) was homogenized by 2 stages (200 bar/40 bar; flow rate: 105 L/hr)by using a homogenizer and, then, sterilized at 94°C for 3 minutes by using a tube type heating machine. The thus-heat-sterilized yogurt milks each having 15 kg were prepared and, then, 4 kg out of 15 kg of each of the yogurt milks was transferred into a previously-sterilized incubation tank and the temperature therein was adjusted such that the temperature of each yogurt milk came to be 42°C.

When a milk temperature of the yogurt milk reached 42°C, 8 ml of a pre-culture was added to the yogurt milk. Further, the pre-culture was prepared by dissolving 50 g of ABT-21 yogurt culture (probiotic culture, manufactured by CHR HANSEN) in 450 g of a cooled skim milk solution. ACTIVA MP (manufactured by Ajinomoto Co., Inc.; enzymatic activity: 100 U/g) was added to the yogurt milk as transglutaminase immediately after the lactic acid bacteria was added such that it came to be 0.02% by weight (0.54 U/1 g of milk protein) on the basis of the weight of the yogurt milk and, then, lightly mixed to allow it to be uniformly dissolved. The yogurt milk inoculated with the lactic acid bacteria was fermented in the incubator under a condition of 42°C. After the fermentation started, a pH value was measured every 30 minutes and, when the pH value came to be 4.6, the fermentation was allowed to be terminated and, then, crushing and filling were performed. As to the crushing, a crushing machine equipped with a small elongated tube having an inner diameter of 10 mm, an extremely fine mesh of 220 μm, a mixer and a cooling jacket was prepared and the crushing was performed by using the thus-prepared crushing machine under pressure applied by a pump. Further, a cooling apparatus was set such that a temperature of the thus-crushed product came to be about 20°C. The thus-crushed yogurt is filled in a sterilized glass container, stored at 4°C and, further, stored for a predetermined period of time and, thereafter, the yogurt sample was subjected to a sensory evaluation.

As for the sensory evaluation, 3 workers skilled in production of yogurt observed a state of yogurt by naked eyes and confirmed a gastronomical texture and evaluated by judging as to whether abnormality is present or absent. In the sensory evaluation with reference to the gastronomical texture, hardness (viscosity), fineness of texture, and an amount of water separation of yogurt are individually evaluated and, taking results of these tests into consideration, a comprehensive evaluation was also performed. As for evaluation of changes of physical properties during storage, presence or absence of gel, and viscosity change were confirmed by a naked eye. Further, as for an evaluation reference, a 5-point evaluation reference was adopted. Analytical results of each sample are shown in Table 2. Still further, evaluations in Table 2 were performed on samples which were stored for one week at 4°C after having been prepared.

Table 2 Sensory evaluation result of yogurt

| Experimental section | Sensory evaluation | | | Comprehensive evaluation | |
|---|---|---|---|---|---|
| | Hardness of gel | Fineness of texture | Amount of water separation | Point | Comment |
| Comparative product 1 | 2 | 1 | 2 | 1 | Inappropriate gastronomical texture; small lumps |
| Comparative product 2 | 3 | 2 | 3 | 3 | No sufficient improvement effect |
| Comparative product 3 | 3 | 2 | 3 | 3 | No sufficient improvement effect |
| Comparative product 4 | 1 | 2 | 3 | 2 | Unduly high gel strength |
| Comparative product 5 | 3 | 2 | 3 | 3 | No sufficient improvement effect |
| Comparative product 6 | 3 | 2 | 3 | 3 | No sufficient improvement effect |
| Comparative product 7 | 3 | 2 | 3 | 3 | No sufficient improvement effect |
| Comparative product 8 | 3 | 2 | 3 | 3 | No sufficient improvement effect |
| Comparative product 9 | 1 | 3 | 3 | 2 | No sufficient improvement effect |
| Comparative product 10 | 1 | 3 | 3 | 2 | No sufficient improvement effect |
| Comparative product 11 | 3 | 2 | 3 | 3 | No sufficient improvement effect |
| Comparative product 12 | 1 | 3 | 1 | 1 | Unduly large water separation; unduly low gel strength |
| Inventive product 1 | 4 | 4 | 4 | 4 | Remarkable improvement effect; small physical property change during storage |
| Inventive product 2 | 5 | 5 | 5 | 5 | Extremely remarkable improvement effect; small physical property change during storage |
| Inventive product 3 | 5 | 5 | 4 | 5 | Extremely remarkable improvement effect; small physical property change during storage |
| Inventive product 4 | 5 | 4 | 4 | 4 | Remarkable improvement effect; small physical property change during storage |
| Comparative product 13 | 2 | 2 | 3 | 1 | Unduly high viscosity; drastic change during storage |
| Comparative product 14 | 2 | 2 | 3 | 1 | Unduly high viscosity; drastic change during storage |

Evaluation references on all of hardness of gel, fineness of texture, amount of water separation, and comprehensive evaluation are as follows:

1 point: remarkably unfavorable;

2 points: rather unfavorable;

3 points: ordinary;

4 points: rather favorable; and

5 points: remarkably favorable.

In Comparative product 1, sufficient hardness was not able to be obtained and confirmed to be inappropriate as yogurt. Further, in Comparative products 2 to 6, as the evaluation results show, fineness of texture was lost and the like and, then, a sufficient improvement effect was not obtained. In all of comparative products 7 to 12, a sufficient improvement effect was not obtained. Particularly, in Comparative product 12, water separation was large and Comparative product 12 was confirmed to be problematic in quality as yogurt. Therefore, in a case in which the milk protein is treated at 90°C, it was confirmed that the quality of yogurt was not able to be improved to a satisfactory extent. In Comparative products 13 and 14, it was confirmed that drastic changes in physical properties thereof were generated during storage. Particularly, in Comparative product 14, since gel strength thereof is too high, it was confirmed that Comparative product 14 was inappropriate as a yogurt product in any experimental section. On the other hand, regardless of being heat-treated under same conditions as in Comparative products 13 and 14, it was confirmed that the inventive products 1 to 4 were each improved in both sensory aspect and physical properties by preparing a milk protein treated product while setting a ratio of casein to a whey protein to be at a specific ratio and that yogurt in which changes of physical properties during storage are suppressed was able to be produced.

These facts indicate that optimization of the degree of denaturation of the whey protein contributes to attaining the object of the present invention to a great extent. Further, as shown in Table 3, in Comparative products 1 to 3 and 7 to 9, it was confirmed that, although casein and the whey protein were compounded under same conditions as in Inventive products 1 to 3, there was a large difference in the quality improvement effect of yogurt. From these results, it is indicated that the heat-treatment condition, namely, the optimization of the degree of denaturation of the whey protein contributes to attaining the object of the present invention to a great extent.

Table 3 Preparation condition of milk protein treated product and result of sensory evaluation of yogurt

| Experimental section | Casein :whey | Heat-treating condition (whey denaturation degree) | Sensory evaluation | | | Comprehensive evaluation | |
|---|---|---|---|---|---|---|---|
| | | | Hardness of gel | Fineness of texture | Amount of water separation | Point | Comment |
| Comparative product 1 | 0:100 | 80°C, 3 min (31.9%) | 2 | 1 | 2 | 1 | Inappropriate gastronomical texture; small lumps |
| Inventive product 1 | | 84°C, 3 min (77.1%) | 4 | 4 | 4 | 4 | Remarkable improvement effect; small physical property change during storage |
| Comparative product 7 | | 90°C, 3 min (89.1%) | 3 | 2 | 3 | 3 | No sufficient improvement effect |
| Comparative product 2 | 32:68 | 80°C, 3 min (18.6%) | 3 | 2 | 3 | 3 | No sufficient improvement effect |
| Inventive product 2 | | 84°C, 3 min (79.8%) | 5 | 4 | 5 | 5 | Remarkable improvement effect; small physical property change during storage |
| Comparative product 8 | | 90°C, 3 min (95.8%) | 3 | 2 | 3 | 3 | No sufficient improvement effect |
| Comparative product 3 | 40:60 | 80°C, 3 min (13.3%) | 3 | 2 | 3 | 3 | No sufficient improvement effect |
| Inventive product 3 | | 84°C, 3 min (78.5%) | 5 | 5 | 5 | 5 | Extremely remarkable improvement effect; small physical property change during storage |
| Comparative product 9 | | 90°C, 3 min (95.1%) | 1 | 3 | 3 | 2 | No sufficient improvement effect |
| Comparative product 4 | 48:52 | 80°C, 3 min (13.3%) | 1 | 2 | 3 | 2 | Unduly high gel strength |
| Inventive product 4 | | 84°C, 3 min (67.8%) | 5 | 4 | 4 | 4 | Remarkable improvement effect; small physical property change during storage |
| Comparative product 10 | | 90°C, 3 min (95.1%) | 1 | 3 | 3 | 2 | No sufficient improvement effect |

Evaluation references on all of hardness of gel, fineness of texture, amount of water separation, and comprehensive evaluation are as follows:

  1 point: remarkably unfavorable;
  2 points: rather unfavorable;
  3 points: ordinary;
  4 points: rather favorable; and
  5 points: remarkably favorable.

Example 2

A milk protein mixture to be used in yogurt was prepared in a same manner as in Example 1 except that a ratio of casein: whey was set to be 40:60. The heat-treating conditions were adjusted in each of the experimental sections, in order to change the degree of denaturation of whey. Detailed conditions are shown in Table 4.

Table 4 Preparation condition of milk protein treated product

| Experimental section | Skim milk (kg) | WPC (kg) | Ratio of Ratio of casein in milk protein treated product (%) | Ratio of whey protein in milk protein treated product (%) | Heat-treating condition | Whey denaturation degree (%) |
|---|---|---|---|---|---|---|
| Comparative product 15 | 10 | 10 | 40 | 60 | 80°C, 3 min | 3 |
| Comparative product 16 | 10 | 10 | 40 | 60 | 80°C, 3 min | 13 |
| Inventive product 5 | 10 | 10 | 40 | 60 | 82°C, 3 min | 27 |
| Inventive product 6 | 10 | 10 | 40 | 60 | 84°C, 3 min | 51 |
| Inventive product 7 | 10 | 10 | 40 | 60 | 84°C, 3 min | 58 |
| Inventive product 8 | 10 | 10 | 40 | 60 | 84°C, 3 min | 79 |
| Comparative product 17 | 10 | 10 | 40 | 60 | 90°C, 3 min | 95 |

Next, a soft type yogurt was prepared by using the above-prepared milk protein treated product in a same manner as in Example 1 and, then, a sensory evaluation was performed thereon. The results are shown in Table 5.

Table 5 Preparation condition of milk protein treated product and result of sensory evaluation of yogurt

| Experimental section | Casein :whey | Heat-treating condition (whey denaturation degree) | Sensory evaluation | | | Comprehensive evaluation | |
|---|---|---|---|---|---|---|---|
| | | | Hardness of gel | Fineness of texture | Amount of water separation | Point | Comment |
| Comparative product 15 | 40:60 . | 80°C, 3 min (3%) | 2 | 2 | 2 | 2 | No sufficient improvement effect |
| Comparative product 16 | | 80°C, 3 min (13%) | 3 | 2 | 3 | 3 | No sufficient improvement effect |
| Inventive product 5 | | 82°C, 3 min (27%) | 4 | 4 | 4 | 4 | Remarkable improvement effect; small physical property change during storage |
| Inventive product 6 | | 84°C, 3 min (51%) | 5 | 4 | 4 | 4 | Extremely remarkable improvement effect; small physical property change during storage |
| Inventive product 7 | | 84°C, 3 min (58%) | 5 | 5 | 4 | 5 | Extremely remarkable improvement effect; small physical property change during storage |
| Inventive product 8 | | 84°C, 3 min (79%) | 5 | 5 | 4 | 5 | Extremely remarkable improvement effect; small physical property change during storage |
| Comparative product 17 | | 90°C, 3 min (95%) | 4 | 3 | 3 | 3 | No sufficient improvement effect |

As shown in Table 5, in the milk protein treated product in which the degree of denaturation of the whey was each of 3% and 13%, no quality improvement effect was observed, while, in the milk protein treated product in which the degree of denaturation of the whey was in the range of from 27% to 79%, remarkable quality improvement effects (gastronomical texture improvement effect, suppression of physical property change during storage) were observed. On the other hand, in a case in which the degree of denaturation was 95%, it was confirmed that the quality improvement effect was decreased. As seen in Inventive products 6 to 8, although the degree of denaturation of the whey protein was not constant depending on difference between lots of WPC 35 and condensed skim milk employed in the experiments even under a same heating condition, in a same manner as in Example 1, the results show that optimization of the degree of denaturation of the whey protein contributes to attaining the object of the present invention to a great extent.

Example 3

A soft type yogurt was prepared by using the milk protein treated product used in Inventive product 3. Sterilized skim milk (protein content: 3.4%) was added with the milk protein treated product used in Inventive product 3 in an amount corresponding to 0.5% of the weight of the raw material milk and, further, added with transglutaminase (ACTIVA YG; manufactured by Ajinomoto Co., Inc.; enzymatic activity: 100 U/g) such that it came to be 1 U per gram of protein derived from cow milk. The resultant yogurt milk (15 kg) was homogenized by using a homogenizer in 2 stages (200 bar/40 bar) and, then, allowed the enzyme to react therewith under conditions defined in Table 6. After the enzymatic reaction was performed under thus-defined conditions, the resultant yogurt milk was heat-treated at 95°C for 3 minutes, to thereby deactivate transglutaminase. Then, 4 kg of each of the thus-treated yogurt milks was transferred into a previously-sterilized incubation tank and, when a milk temperature of each yogurt milk reached 42°C, 8 ml of a pre-culture was added to each yogurt milk. Further, the pre-culture was prepared by dissolving 50 g of ABT-21 yogurt culture (probiotic culture; manufactured by CHR HANSEN) in 450 g of a cooled skim milk solution. The yogurt milk inoculated with the lactic acid bacteria was fermented in the incubator under a condition of 42°C. After the fermentation started, a pH value was measured every 30 minutes and, when the pH value came to be 4.6, the fermentation was allowed to be terminated and, then, crushing and filling were performed. As for the crushing, a crushing machine equipped with a small elongated tube having an inner diameter of 10 mm, an extremely fine mesh of 220 $\mu$m, a mixer and a cooling jacket was prepared and the crushing was performed by using the thus-prepared crushing machine under pressure applied by a pump. The cooling apparatus was set such that a temperature of the thus-crushed product came to be about 20°C. The thus-crushed yogurt was filled in a sterilized glass container, stored at 4°C and, further, stored for a predetermined period of time and, thereafter, the resultant yogurt sample was subjected to a sensory evaluation in a same manner as in Example 1. Still further, a degree of polymerization of casein was also measured by using a size exclusion chromatography method. The results of the polymerization degree measurements were shown in Table 7 together with the results of the sensory evaluation.

Even still further, as comparative products, that which had not been added with transglutaminase (Comparative product 18) and that which had used in the milk protein treated product a treated product used in Comparative product 14 (Comparative product 19) were prepared.

Table 6 Reaction condition of transglutaminase

| Experimental section | Casein:whey | Reaction temperature (°C) | Reaction time (hr) |
|---|---|---|---|
| Comparative product 18 | 40:60 | - | - |
| Comparative product 19 | 80:20 | 42 | 3 |
| Inventive product 9 | 40:60 | 10 | 12 |
| Inventive product 10 | 40:60 | 42 | 3 |
| Inventive product 11 | 40:60 | 50 | 2 |
| Inventive product 12 | 40:60 | 55 | 1 |
| Inventive product 13 | 40:60 | 60 | 0.5 |

Table 7 Polymerization degree of casein and result of sensory evaluation of yogurt

| Experimental section | Polymerization degree (%) | Hardness of gel | Fineness of texture | Amount of water separation | Change during storage | Comprehensive evaluation | Comment |
|---|---|---|---|---|---|---|---|
| Comparative product 18 | 11 | 2 | 2 | 2 | No | 2 | Brittle |
| Comparative product 19 | 35 | 4 | 3 | 4 | Yes | 2 | Unduly high viscosity |
| Inventive product 9 | 26 | 5 | 5 | 4 | No | 5 | Favorable |
| Inventive product 10 | 32 | 4 | 4 | 5 | Slightly | 4 | Slightly high viscosity |
| Inventive product 11 | 29 | 5 | 5 | 4 | No | 5 | Favorable |
| Inventive product 12 | 24 | 5 | 5 | 4 | No | 5 | Favorable |
| Inventive product 13 | 18 | 3 | 4 | 4 | No | 4 | Slightly brittle |

The polymerization degree was calculated in accordance with the following calculating formula by firstly analyzing contents of a monomer, a dimer, a trimer and a multimeric body (polymer higher than trimer) of casein by using the size exclusion chromatography and, then, taking a sum of the above-described four components as an amount of an entire casein protein:

$$\text{Casein polymerization degree (\%)}$$

$$= (\text{dimer} + \text{trimer} + \text{multimeric body})$$

$$/ (\text{monomer} + \text{dimer} + \text{trimer} + \text{multimeric body}) \times 100.$$

When the degree of polymerization of casein was measured by using the size exclusion chromatography under the following conditions, times at which peaks of casein multimeric bodies (polymer higher than trimer, trimer, and dimer), monomer, and other low molecular peptides or salts thereof appeared were from about 16 to about 23 minutes, from about 23 to about 28 minutes, and from about 34 to about 47 minutes in the stated order:

System: AKTA BASIC AMERSHAM BIOSCIENCES A900, P900 pump;
Column: Superdex 200HR 10/30 (71-7059-00), AMERSHAM BIOSCIENCES;
Detection wavelength: 280 nm;
Injection amount: 50 μl;
Flow rate: 0.5 ml/min; and
Eluting solution: 6M Urea/0.1M NaCl/0.1M Phosphate/0.1% CHAPS/PH=6.8.

Further, in order to exclude an effect of an S-S bond to the degree of polymerization, an eluting solution which has been added with 1% DDT was used in a buffer for sample adjustment to be supplied to the size exclusion chromatography. Yogurt, a test body, was dissolved in 2 ml of sample buffer such that a protein concentration came to be 0.3% and, then, crushed for 20 minutes by using ultrasonic wave and, further, adequately mixed by using a vortex mixer and, thereafter, left to stand for 24 hours at 4°C. Immediately before analysis, the resultant crushed liquid was allowed to pass through a microfilter having a pore size of 0.45 μm. The resultant supernatant was supplied to the size exclusion chromatography.

As shown in Table 7, when the degree of polymerization was 11% or less, a problem of brittle structure was observed, while, when it was 35% or more, problems that the structure was rough and lacked fine texture, a structure change occurred during storage and the like were observed. The range of the degree of polymerization which caused no problem in the gastronomical texture or changes with time at the time of storage was from 18% to 32%. Among other things, in the range of from 24% to 29%, particularly desirable effect was obtained. From these results, it is indicated that the degree of polymerization of casein in the product is also an important factor of the present invention.

Example 4

A soft type yogurt was prepared by using the milk protein treated product used in Inventive product 3. Sterilized skim milk (protein content: 3.4%) was added with the milk protein treated product used in Inventive product 3 in an amount in accordance with an addition amount shown in Table 8. Other conditions were same as in Example 1. Preparation of yogurt and sensory evaluation thereof were performed in accordance with these conditions. The results of the sensory evaluation are shown in Table 9.

Table 8 Addition amount of milk protein treated product and ratio of casein: whey in yogurt

| Experimental section | Addition amount of milk protein treated product (%) | Casein:whey in yogurt |
|---|---|---|
| Inventive product 14 | 0.25 | 77:23 |
| Inventive product 15 | 0.5 | 75:25 |
| Inventive product 16 | 1.0 | 71:29 |
| Inventive product 17 | 1.5 | 68:32 |
| Inventive product 18 | 2.0 | 65:35 |

(continued)

| Experimental section | Addition amount of milk protein treated product (%) | Casein:whey in yogurt |
|---|---|---|
| Comparative product 20 | 2.5 | 63:37 |

Table 9 Result of sensory evaluation of yogurt

| Experimental section | Hardness of gel | Fineness of texture | Amount of water separation | Change during storage | Comprehensive evaluation | Comment |
|---|---|---|---|---|---|---|
| Inventive product 14 | 4 | 3 | 4 | No | 4 | Although improvement effect being present, it is slightly weak. |
| Inventive product 15 | 5 | 5 | 4 | No | 5 | Remarkable improvement effect |
| Inventive product 16 | 5 | 5 | 5 | No | 5 | Remarkable improvement effect |
| Inventive product 17 | 5 | 4 | 5 | No | 5 | Remarkable improvement effect |
| Inventive product 18 | 4 | 3 | 4 | No | 4 | Although improvement effect being present, it is slightly powdery gastronomical texture |
| Comparative product 20 | 3 | 3 | 4 | No | 3 | Powdery gastronomical texture |

As shown in Table 9, as for the optimal amount to be added of the milk protein treated product, the ratio of casein: whey protein in yogurt which was the final product was important and an appropriate ratio thereof was from 77:23 to 65:35 and, preferably, from 75:25 to 68:32. The effect of the present invention can be obtained so long as the milk protein treated product defined in Claims is used and, also, the ratio in the final yogurt is within the above-described ranges. From the standpoint of the amount to be added, when the amount to be added was 2.5% on the basis of the weight of the raw material milk, a powdery texture derived from the protein treated product was provided and it was, preferably, from 0. 25 to 2.0%. These results indicate that not only the ratio of casein to the whey protein in the milk protein treated product but also the ratio of casein to the whey protein in the yogurt product is an important factor of the present invention.

Industrial Applicability

According to the present invention, even when the activity of transglutaminase remains, since a detrimental influence such as gelation or generation of lumps during storage is not provided, a high effect can be exhibited in modification, namely, improvement of gastronomical texture, and suppression of water separation of yogurt, without introducing a step of deactivating the enzyme in the production process of yogurt. Further, even when such deactivating step is introduced, an excessive reaction of transglutaminase can be suppressed and, then, change of the quality with time during storage can be suppressed. Under these circumstances, it can be said that the present invention is extremely useful in the field of foods.

**Claims**

1.   A production method for yogurt, using a milk protein treated product obtainable by heat-treating a whey protein under a condition in which the degree of denaturation of the whey protein is from 60 to 88% and transglutaminase, wherein said heat-treatment is performed at from 81°C to 89°C for from 1 to 10 minutes.

2. A production method for yogurt, using a milk protein treated product obtainable by heat-treating a mixture in which a mixing ratio of casein to a whey protein is from 20:80 to 54:46 in terms of weight ratio of nitrogen under a condition in which the degree of denaturation of the whey protein is from 25% to 93% and transglutaminase, wherein said heat-treatment is performed at from 81°C to 89°C for from 1 to 10 minutes.

3. The production method according to Claim 1 or 2, wherein the milk protein treated product is obtained by heat-treating a mixture in which a mixing ratio of casein to a whey protein is from 32:68 to 48:52 in terms of weight ratio of nitrogen under a condition in which the degree of denaturation of the whey protein is from 27% to 79%.

4. The production method according to Claims 1 to 3, wherein the milk protein treated product is added to a raw material milk in an amount of 0.2 to 2.3%.

5. The method according to Claims 1 to 4, being **characterized by** not comprising the step of heat-deactivating transglutaminase.

6. The production method according Claims 1 to 5, wherein the yogurt has a degree of polymerization of casein by transglutaminase from 15 to 33%.

7. The production method according to Claims 1 to 6, wherein the ratio of casein to a whey protein in the yogurt is from 77:23 to 65:35 in terms of weight ratio of nitrogen.

8. A milk protein treated product obtainable by heat-treating a whey protein under a condition in which the degree of denaturation of the whey is from 60 to 88%, wherein said heat-treatment is performed at from 81°C to 89°C for from 1 to 10 minutes.

9. A milk protein treated product obtainable by heat-treating a mixture in which a mixing ratio of casein to a whey protein is from 20:80 to 54:46 in terms of weight ratio of nitrogen under a condition in which a degree of denaturation of the whey protein is from 25% to 93%, wherein said heat-treatment is performed at from 81°C to 89°C for from 1 to 10 minutes.

10. An enzyme preparation for a dairy product, comprising a milk protein treated product according to claim 8 or 9 and transglutaminase.

11. A yogurt obtainable by using a production method according to any one of claims 1 to 7.

12. A yogurt obtainable by mixing a milk protein treated product according to claim 8 or 9 with transglutaminase and raw material milk.

13. A yogurt obtainable by mixing an enzyme preparation according to claim 10 with raw material milk.

**Patentansprüche**

1. Verfahren zur Produktion von Yoghurt unter Verwendung eines behandelten Milchproteinprodukts, erhältlich durch Wärmebehandeln eines Molkenproteins unter einer Bedingung, bei der der Denaturierungsgrad des Molkenproteins 60 bis 88 % ist, und von Transglutaminase, wobei die Wärmebehandlung bei 81 bis 89°C während 1 bis 10 Minuten durchgeführt wird.

2. Verfahren zur Herstellung von Yoghurt unter Verwendung eines behandelten Milchproteinprodukts, erhältlich durch Wärmebehandeln eines Gemisches, worin das Mischungsverhältnis von Casein zu einem Molkenprotein 20:80 bis 54:46, ausgedrückt als das Gewichtsverhältnis von Stickstoff, ist, unter einer Bedingung, bei der der Denaturierungsgrad des Molkenproteins 25 % bis 93 % ist, und von Transglutaminase, wobei die Wärmebehandlung bei 81 bis 89°C während 1 bis 10 Minuten durchgeführt wird.

3. Herstellungsverfahren nach Anspruch 1 oder 2, wobei das behandelte Milchproteinprodukt durch Wärmebehandeln eines Gemisches, worin das Mischungsverhältnis von Casein zu einem Molkenprotein 32:68 bis 48:52, ausgedrückt als das Gewichtsverhältnis von Stickstoff, ist, unter einer Bedingung, bei der der Denaturierungsgrad des Molkenproteins 27 bis 79 % ist, erhalten wird.

**4.** Herstellungsverfahren nach Anspruch 1 bis 3, wobei das behandelte Milchproteinprodukt zu einer Ausgangsmaterialmilch in einer Menge von 0,2 % bis 2,3 % gegeben wird.

**5.** Verfahren nach Anspruch 1 bis 4, **dadurch gekennzeichnet, dass** die Stufe der Hitzedeaktivierung von Transglutaminase nicht umfasst ist.

**6.** Herstellungsverfahren nach den Ansprüchen 1 bis 5, wobei der Yoghurt einen Polymerisationsgrad von Casein durch Transglutaminase von 15 % bis 33 % aufweist.

**7.** Herstellungsverfahren nach den Ansprüchen 1 bis 6, wobei das Verhältnis von Casein zu einem Molkenprotein in dem Yoghurt 77:23 bis 65:35, ausgedrückt als das Gewichtsverhältnis von Stickstoff, ist.

**8.** Behandeltes Milchproteinprodukt, erhältlich durch Wärmebehandeln eines Molkenproteins unter einer Bedingung, bei der der Denaturierungsgrad der Molke 60 % bis 88 % ist, wobei die Wärmebehandlung bei 81 bis 89°C während 1 bis 10 Minuten durchgeführt wird.

**9.** Behandeltes Milchproteinprodukt, erhältlich durch Wärmebehandeln eines Gemisches, worin ein Mischungsverhältnis von Casein zu einem Molkenprotein 20:80 bis 54:46, ausgedrückt als Gewichtsverhältnis von Stickstoff, ist, unter einer Bedingung, bei der ein Denaturierungsgrad des Molkenproteins 25 % bis 93 % ist, wobei die Wärmebehandlung bei 81 bis 89°C während 1 bis 10 Minuten durchgeführt wird.

**10.** Enzymzubereitung für ein Molkereiprodukt, die ein behandeltes Milchproteinprodukt nach Anspruch 8 oder 9 und Transglutaminase enthält.

**11.** Yoghurt, erhältlich unter Verwendung eines Herstellungsverfahrens nach einem der Ansprüche 1 bis 7.

**12.** Yoghurt, erhältlich durch Mischen eines behandelten Milchproteinprodukts nach Anspruch 8 oder 9 mit Transglutaminase und Ausgangsmaterialmilch.

**13.** Yoghurt, erhältlich durch Mischen einer Enzymzubereitung nach Anspruch 10 mit Ausgangsmaterialmilch.


**Revendications**

**1.** Procédé de production de yogourt, utilisant un produit traité de protéine de lait pouvant être obtenu par traitement thermique d'une protéine de lactosérum dans des conditions dans lesquelles le degré de dénaturation de la protéine de lactosérum est de 60 à 88 % et une transglutaminase, ledit traitement thermique étant effectué à 81 °C à 89 °C pendant 1 à 10 minutes.

**2.** Procédé de production de yogourt, utilisant un produit traité de protéine de lait pouvant être obtenu par traitement thermique d'un mélange dans lequel un rapport de mélange de la caséine à une protéine de lactosérum est de 20:80 à 54:46 en termes de rapport en poids d'azote dans des conditions dans lesquelles le degré de dénaturation de la protéine de lactosérum est de 25 % à 93 % et une transglutaminase, ledit traitement thermique étant effectué à 81 °C à 89 °C pendant 1 à 10 minutes.

**3.** Procédé de production selon la revendication 1 ou 2, dans lequel le produit traité de protéine de lait est obtenu par traitement thermique d'un mélange dans lequel un rapport de mélange de la caséine à une protéine de lactosérum est de 32:68 à 48:52 en termes de rapport en poids d'azote dans des conditions dans lesquelles le degré de dénaturation de la protéine de lactosérum est de 27 % à 79 %.

**4.** Procédé de production selon les revendications 1 à 3, dans lequel le produit traité de protéine de lait est ajouté à une matière première de lait en une quantité de 0,2 à 2,3 %.

**5.** Procédé selon les revendications 1 à 4, étant **caractérisé en ce qu'**il ne comprend pas l'étape de désactivation thermique de transglutaminase.

**6.** Procédé de production selon les revendications 1 à 5, dans lequel le yogourt a un degré de polymérisation de caséine par la transglutaminase de 15 à 33 %.

**7.** Procédé de production selon les revendications 1 à 6, dans lequel le rapport de la caséine à une protéine de lactosérum dans le yogourt est de 77:23 à 65:35 en termes de rapport en poids d'azote.

**8.** Produit traité de protéine de lait pouvant être obtenu par traitement thermique d'une protéine de lactosérum dans des conditions dans lesquelles le degré de dénaturation du lactosérum est de 60 à 88 %, ledit traitement thermique étant effectué à 81 °C à 89 °C pendant 1 à 10 minutes.

**9.** Produit traité de protéine de lait pouvant être obtenu par traitement thermique d'un mélange dans lequel le rapport de mélange de la caséine à une protéine de lactosérum est de 20:80 à 54:46 en termes de rapport en poids d'azote dans des conditions dans lesquelles le degré de dénaturation de la protéine de lactosérum est de 25 % à 93 %, ledit traitement thermique étant effectué à 81 °C à 89 °C pendant 1 à 10 minutes.

**10.** Préparation d'enzyme pour un produit laitier, comprenant un produit traité de protéine de lait selon la revendication 8 ou 9 et une transglutaminase.

**11.** Yogourt pouvant être obtenu par utilisation d'un procédé de production selon l'une quelconque des revendications 1 à 7.

**12.** Yogourt pouvant être obtenu par mélange d'un produit traité de protéine de lait selon la revendication 8 ou 9 avec une transglutaminase et une matière première de lait.

**13.** Yogourt pouvant être obtenu par mélange d'une préparation d'enzyme selon la revendication 10 avec une matière première de lait.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001252011 A
- JP 3182954 B
- WO 200110232 A
- US 3535304 A
- US 4519945 A
- US 3882256 A
- JP 1027471 A
- JP 1050382 B
- JP 1300899 A

### Non-patent literature cited in the description

- Milk Comprehensive Dictionary. Asakura Publishing Co., Ltd, 1992, 237
- Dairy Chemistry and Biochemistry. BLACKIE ACADEMIC & PROFESSIONAL, 363-368
- Dairy Chemistry and Biochemistry. BLACKIE ACADEMIC & PROFESSIONAL, 227-228
- *Autumnal Conference, Proceedings,* 1991, vol. 3, 180